(19)

Europäisches
Patentamt
European
Patent Office
Office européen
des brevets

(11) **EP 4 553 179 A1**

(12) **EUROPEAN PATENT APPLICATION**
published in accordance with Art. 153(4) EPC

(43) Date of publication:
**14.05.2025 Bulletin 2025/20**

(51) International Patent Classification (IPC):
*C22C 9/00* (2006.01)     *B23K 20/00* (2006.01)
*C22F 1/08* (2006.01)     *C22F 1/00* (2006.01)

(21) Application number: 23835506.9

(52) Cooperative Patent Classification (CPC):
**B23K 20/00; C22C 9/00; C22F 1/08;** C22F 1/00

(22) Date of filing: 03.07.2023

(86) International application number:
**PCT/JP2023/024696**

(87) International publication number:
**WO 2024/009974 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 06.07.2022 JP 2022109354

(71) Applicant: NGK Insulators, Ltd.
**Nagoya-shi, Aichi 467-8530 (JP)**

(72) Inventors:
• **AKAIWA, Masaaki**
  **Nagoya-shi, Aichi 467-8530 (JP)**
• **ISHIKAWA, Takahiro**
  **Nagoya-shi, Aichi 467-8530 (JP)**
• **NOMURA, Kazuhiro**
  **Nagoya-shi, Aichi 467-8530 (JP)**

(74) Representative: **Mewburn Ellis LLP**
  **Aurora Building**
  **Counterslip**
  **Bristol BS1 6BX (GB)**

(54) **COPPER ALLOY JOINED BODY**

(57) There is provided a bonded body of an age-hardenable copper alloy which has realized an extremely high bonding strength. This copper alloy bonded body is composed of a plurality of members made of an age-hardenable copper alloy, the members diffusion-bonded to one another, wherein a bonding interface between the members remains. In the copper alloy bonded body, the content of beryllium in the age-hardenable copper alloy is 0.7% by weight or less, and, in a laser microscope image of a section including the bonding interface, a ratio of a total length of a line segment corresponding to a discontinuous region relative to an entire length of a bonding interface line defined along the bonding interface and a position where the bonding interface was present is 3.5% or more. The discontinuous region is defined as a region where, when a plurality of perpendicular lines is drawn with respect to the bonding interface line at a pitch of 5 $\mu$m, three or more adjacent perpendicular lines do not intersect with the remaining bonding interface.

FIG. 3

EP 4 553 179 A1

**Description**

TECHNICAL FIELD

The present invention relates to a copper alloy bonded body.

BACKGROUND ART

In a hydrogen station that supplies hydrogen to a fuel cell vehicle or the like, a pre-cooler for enabling rapid supply of high-pressure hydrogen cooled to about -45°C is installed. That is, when a tank of a fuel cell vehicle or the like is rapidly filled with hydrogen, the temperature of the tank rises due to adiabatic compression, which is dangerous, and therefore hydrogen, when supplied, is cooled with a pre-cooler in advance, which enables safe and rapid supply of high-pressure hydrogen to a fuel cell vehicle or the like. Accordingly, a material including tensile strength that is bearable to high pressure and a thermal conductive property that enables efficient cooling, not to mention being free from hydrogen brittleness, is preferably used for a heat exchanger which is a main component of a pre-cooler for a hydrogen station. Currently, stainless steel for high-pressure hydrogen, such as SUS316L (Ni equivalent material), is adopted for a heat exchanger of a pre-cooler for a hydrogen station from a requirement of not causing hydrogen embrittlement to occur, but there is still room for improvements from the viewpoint of the tensile strength and thermal conductive property.

Beryllium copper, which is known as a material having a high tensile strength and thermal conductive property, is suitable for a material for a heat exchanger and has been confirmed not to cause hydrogen embrittlement to occur even under high-pressure hydrogen. For example, Patent Literature 1 (JPH9-87780A) discloses a beryllium copper alloy for a heat exchanger, wherein the content by percentage of Be is 1.0 to 2.5%, the total content by percentage of Ni and Co is 0.2 to 0.6%, and the balance is composed of Cu and inevitable impurities, although the beryllium copper alloy is not for a hydrogen station. In addition, Patent Literature 2 (JP2017-145472A) discloses a beryllium copper alloy, wherein the content of Be is 0.20 to 2.70% by weight, the total content of Co, Ni, and Fe is 0.20 to 2.50% by weight, and the total content of Cu, Be, Co, and Ni is 99% by weight or more, and states that the beryllium copper alloy is superior in hydrogen embrittlement resistance, tensile strength, and a thermal conductive property. A beryllium copper alloy has a tensile strength higher (for example, about 1.5 to about 2.5 times higher) than that of stainless steel for high-pressure hydrogen and a thermal conductivity higher (for example, about 7 to about 16 times higher) than that of stainless steel in addition to being free from hydrogen brittleness (that is, having hydrogen embrittlement resistance), and therefore can make the size of a heat exchanger for high-pressure hydrogen outstandingly smaller (for example, about 1/4 times smaller) than that of a heat exchanger for high-pressure hydrogen made of stainless steel, which cannot be achieved with low-purity copper and a copper alloy having a low strength.

CITATION LIST

PATENT LITERATURE

Patent Literature 1: JPH9-87780A
Patent Literature 2: JP2017-145472A

SUMMARY OF INVENTION

A heat exchanger of a pre-cooler for a hydrogen station has a structure formed by bonding multiple layers of metal sheets including a slit or a groove in order to form a flow passage to allow hydrogen and a refrigerant to pass. As a currently adopted method for bonding stainless steel for high-pressure hydrogen, diffusion bonding is widely known in which an oxide film of the surface layer is removed by sublimation in a pressure reducing and temperature increasing process to a bonding temperature, and pressure for adhesion is applied to a bonding part at a high temperature equal to or lower than the melting point to bond the stainless steel sheets. However, with regard to a copper alloy, (i) the copper alloy has a strong oxide film that is not easily removed by simple pressure reduction and temperature increase and/or (ii) even if an oxide film is removed before bonding, an oxide film is also likely to be formed again in a bonding surface (close contact surface) during temperature increase under high vacuum in a bonding step (besides, the oxide film is unlikely to be sublimated even when the temperature becomes close to the bonding temperature). When diffusion bonding is performed on such a copper alloy in a similar step, a certain bonding strength is secured, but it has been difficult to obtain a texture and strength equal to those of a base material. Particularly, to realize a copper alloy member having an extremely high strength required in uses of the above-described heat exchanger for high pressure, solution annealing and an aging treatment need to be performed on an age-hardenable copper alloy. However, there has been a problem that a diffusion-bonded body of an age-hardenable copper alloy in which a sufficient bonding strength is not secured cannot withstand severe thermal shock or dimensional fluctuation accompanying the solution annealing and the aging treatment and is broken at a bonding part.

The inventors have now found that in the case of selectively adopting an age-hardenable copper alloy of which the beryllium content is 0.7% by weight or less, finishing a bonding surface to a predetermined flatness to remove an oxide film, and then performing diffusion bonding (and, if necessary, homogenization treatment), it is possible to perform solution annealing and an aging treatment in such a way as to allow a ratio of a total length of a discontinuous region relative to an entire length of a bonding interface line in a section observation image to be 3.5% or more, thereby providing a copper alloy bonded body having an extremely high bonding strength.

Accordingly, an object of the present invention is to provide a bonded body of an age-hardenable copper alloy which has realized an extremely high bonding strength.

The present invention provides the following aspects:

[Aspect 1]

A copper alloy bonded body composed of a plurality of members made of an age-hardenable copper alloy, the members diffusion-bonded to one another, wherein a bonding interface between the members remains,

> wherein the content of beryllium in the age-hardenable copper alloy is 0.7% by weight or less, and
> wherein in a laser microscope image of a section including the bonding interface, a ratio of a total length of a line segment corresponding to a discontinuous region relative to an entire length of a bonding interface line defined along the bonding interface and a position where the bonding interface was present is 3.5% or more, and
> wherein the discontinuous region is defined as a region where, when a plurality of perpendicular lines is drawn with respect to the bonding interface line at a pitch of 5 $\mu$m, three or more adjacent perpendicular lines do not intersect with the remaining bonding interface.

[Aspect 2]

The copper alloy bonded body according to aspect 1, wherein the copper alloy bonded body has undergone solution annealing and an aging treatment.

[Aspect 3]

The copper alloy bonded body according to aspect 1 or 2, wherein a strength of a bonding part of the copper alloy bonded body is 70% or more of a strength of a base material of the copper alloy bonded body.

[Aspect 4]

The copper alloy bonded body according to any one of aspects 1 to 3, wherein a strength of a bonding part of the copper alloy bonded body is 85% or more of a strength of a base material of the copper alloy bonded body.

[Aspect 5]

The copper alloy bonded body according to any one of aspects 1 to 4, comprising crystal grains of the age-hardenable copper alloy grown beyond the bonding interface or the position where the bonding interface was present.

[Aspect 6]

The copper alloy bonded body according to any one of aspects 1 to 5, wherein a residual component derived from a material other than the age-hardenable copper alloy is absent at the bonding interface or the position where the bonding interface was present.

[Aspect 7]

The copper alloy bonded body according to any one of aspects 1 to 6, wherein a base material and a bonding part of the copper alloy bonded body have a strength of 520 MPa or higher.

[Aspect 8]

The copper alloy bonded body according to aspect 7, wherein the base material and the bonding part of the copper alloy bonded body have a strength of 690 MPa or higher.

[Aspect 9]

The copper alloy bonded body according to any one of aspects 1 to 8, wherein a bonding part of the copper alloy bonded body has a bonding strength that is 85% or more of a strength of a base material of the copper alloy bonded body at a temperature of -196°C.

[Aspect 10]

The copper alloy bonded body according to any one of aspects 1 to 9, wherein a bonding part of the copper alloy bonded body has a charpy impact value that is 15% or more of a charpy impact value of a base material of the copper alloy bonded body at each temperature of 25°C and -196°C.

[Aspect 11]

The copper alloy bonded body according to any one of aspects 1 to 10, wherein a base material including a bonding part of the copper alloy bonded body has a thermal conductivity of 209 W/mK or more.

[Aspect 12]

The copper alloy bonded body according to any one of aspects 1 to 11, wherein a base material including a bonding part of the copper alloy bonded body has an electrical conductivity of 50 IACS% or more.

[Aspect 13]

The copper alloy bonded body according to any one of aspects 1 to 12, wherein the age-hardenable copper alloy is at least one selected from the group consisting of beryllium copper alloy 11 (JIS alloy number C1751, EN material number CW110C, and UNS alloy number C17510), beryllium copper alloy 10 (EN material number CW104C and UNS alloy number C17500), beryllium copper CuCo1Ni1Be (EN material number CW103C), beryllium copper alloy 14Z (composed of Be: 0.2 to 0.6% by weight, Ni: 1.4 to 2.4% by weight, Zr: 0 to 0.5% by weight, and the balance being Cu and inevitable impurities), beryllium copper alloy 50 (composed of Be: 0.2 to 0.6% by weight, Ni: 1.4 to 2.1% by weight, Ag: 0.1 to 0.3% by weight, Zr: 0 to 0.5% by weight, and the balance being Cu and inevitable impurities), beryllium copper alloy 10Zr (composed of Be: 0.4 to 0.7% by weight, Co: 2.0 to 2.8% by weight, Zr: 0 to 0.3% by weight, and the balance being Cu and inevitable impurities), chromium copper (UNS alloy number C18200), chromium zirconium copper (UNS alloy number C18510 and EN material number CW106C), zirconium copper (UNS alloy number C15000, EN material number CW120C), and Corson copper (EN material number CW109C, CW111C, UNS alloy number C19010, C70250, AMPCO944 (composed of Ni: 6.5 to 7.5% by weight, Si: 1.5 to 2.5% by weight, Cr: 0.5 to 1.5% by weight, and the balance being Cu and inevitable impurities), and AMPCO940 (composed of Ni: 1.5 to 3.0% by weight, Si: 0.5 to 1.5% by weight, Cr: 0.3 to 1.5% by weight, and the balance being Cu and inevitable impurities)).

[Aspect 14]

The copper alloy bonded body according to aspect 13, wherein the age-hardenable copper alloy is a beryllium copper alloy 11 (JIS alloy number C1751, EN material number CW110C, and UNS alloy number C17510).

[Aspect 15]

The copper alloy bonded body according to any one of aspects 1 to 14, wherein the copper alloy bonded body comprises a flow passage space inside.

BRIEF DESCRIPTION OF DRAWINGS

Figure 1A is a diagram for describing procedures of an experiment of performing elemental analysis of oxide films formed on surfaces of copper alloys in a thermal treatment in a high-vacuum furnace, and conceptually shows progress of oxidation, and shows positions of an in-furnace open surface and a close contact surface where the elemental analysis is performed, and appearances of samples.

Figure 1B shows results of the elemental analysis of the oxide films formed on the surfaces (acid-washed surface, in-furnace open surface and/or close contact surface) of the copper alloys when the thermal treatment was performed in the high-vacuum furnace according to the procedures of the experiment shown in Figure 1A. Specifically, Figure 1B shows results of XPS for beryllium copper alloy 25, beryllium copper alloy 165, beryllium copper alloy 11, beryllium copper alloy 10Zr, beryllium copper alloy 50, and chromium copper alloy.

Figure 1C shows results of the elemental analysis of the oxide films formed on the surfaces (acid-washed surface, in-furnace open surface and/or close contact surface) of the copper alloys when the thermal treatment was performed in the high-vacuum furnace according to the procedures of the experiment shown in Figure 1A. Specifically, Figure 1C shows results of XPS for Corson copper AM PCO940 and Corson copper AM PCO944.

Figure 2A is a diagram for describing one aspect of a discontinuous region at a bonding interface.

Figure 2B is a diagram for describing another aspect of a discontinuous region at a bonding interface.

Figure 3 shows laser microscope images of sections each including a bonding interface of a copper alloy bonded body prepared through solution annealing and an aging treatment in each of Examples 1a to 1d.

Figure 4 shows laser microscope images of sections each including a bonding interface of a copper alloy bonded body prepared through solution annealing and an aging treatment in each of Examples 2a to 2f.

Figure 5 shows laser microscope images of sections each including a bonding interface of a copper alloy bonded body prepared through solution annealing and an aging treatment in each of Examples 3 to 7b.

Figure 6A' is a diagram illustrating the first half of a series of steps to calculate the discontinuous region length by subjecting a laser microscope image to image processing using the image analysis software ImageJ.

Figure 6B is a diagram illustrating the latter half of a series of steps to calculate the discontinuous region length by subjecting a laser microscope image to image processing using the image analysis software ImageJ.

DESCRIPTION OF EMBODIMENTS

Copper Alloy Bonded Body

A copper alloy bonded body of the present invention is composed of a plurality of members made of an age-hardenable copper alloy, the members diffusion-bonded to one another, wherein typically the copper alloy bonded body has undergone solution annealing and an aging treatment. In this copper alloy bonded body, a bonding interface between the members remains. The content of beryllium in the age-hardenable copper alloy is 0.7% by weight or less. In this copper alloy bonded body, in a laser microscope image of a section including the bonding interface, a ratio of a total length of a line segment corresponding to a discontinuous region relative to an entire length of a bonding interface line defined along the bonding interface and a position where the bonding interface was present is 3.5% or more. The discontinuous region is defined as a region where, when a plurality of perpendicular lines is drawn with respect to the bonding interface line at a pitch of 5 $\mu$m, three or more adjacent perpendicular lines do not intersect with the remaining bonding interface. In this way, in the case of selectively adopting the age-hardenable copper alloy of which the beryllium content is 0.7% by weight or less and performing the solution annealing and the aging treatment (after performing a homogenization treatment as necessary) in such a way as to allow the ratio of a total length of a discontinuous region relative to an entire length of a bonding interface line in a section observation image to be 3.5% or more, it is possible to provide a copper alloy bonded body having an extremely high bonding strength.

As described above, when diffusion bonding is performed, in a similar step, on the copper alloy wherein (i) the copper alloy has a strong oxide film that is not easily removed by simple pressure reduction and temperature increase and/or (ii) an oxide film is also likely to be formed again under high vacuum, a certain bonding strength is secured, but it has been difficult to obtain a texture and strength equal to those of a base material. Particularly, to realize a copper alloy member having an extremely high strength required in uses of the above-described heat exchanger, solution annealing and an aging treatment need to be performed on an age-hardenable copper alloy, but there has been a problem that a diffusion-bonded body of an age-hardenable copper alloy cannot withstand severe thermal shock or dimensional fluctuation accompanying the solution annealing and the aging treatment and is broken at a bonding part.

In this regard, according to the constitution of the present invention, such problems are conveniently solved and a copper alloy bonded body having an extremely high bonding strength can be provided. The reason is as follows, as made clear in confirmation tests conducted by the present inventors, which will be described later. That is, the age-hardenable copper alloy in which the content of beryllium is 0.7% by weight or less is selectively adopted, the flatness and surface roughness of each bonding surface are adjusted in such a way as to be suitable for diffusion bonding and an oxide film at the bonding surface is then removed, bonding interfaces of copper alloy members are brought into contact with each other, and the pressure is applied and the temperature is increased to perform diffusion bonding. In this case, the ratio of a discontinuous region (region where the bonding interface is broken) at the bonding interface (or at the position where the bonding interface was present), which is formed in an age-hardenable copper alloy in which the content of beryllium is more than 0.7% by weight, is increased, so that the remaining bonding interface decreases and as a result, high-quality diffusion bonding that is sufficiently bearable to solution annealing and an aging treatment is realized. That is, the presence of the discontinuous region reduces the ratio of an oxide at the interface, which is considered to contribute to improving the bonding strength.

It is known that stainless steel, pure copper, and the like can be bonded with high reliability by diffusion bonding. Stainless steel has strong weatherability because a dense chromium oxide film as the surface layer formed under the air serves as a protecting film, but this oxide film is sublimated when heated at a temperature higher than 700°C under high vacuum. Therefore, the oxide film is naturally removed during temperature increase in diffusion bonding and a surface of active stainless steel whose surface layer is free from an oxide film is easily obtained, so that favorable bonding such that an oxide and another foreign material do not remain at the bonding interface can be performed only by pressurization at a bonding temperature. In addition, pure copper has a copper oxide (CuO) film as the surface layer, but the oxide decomposes and oxygen diffuses into the copper matrix during the time when the temperature is kept at a diffusion bonding temperature, and therefore favorable bonding such that an oxide and another foreign material do not remain at the bonding interface can be performed on pure copper as well as stainless steel.

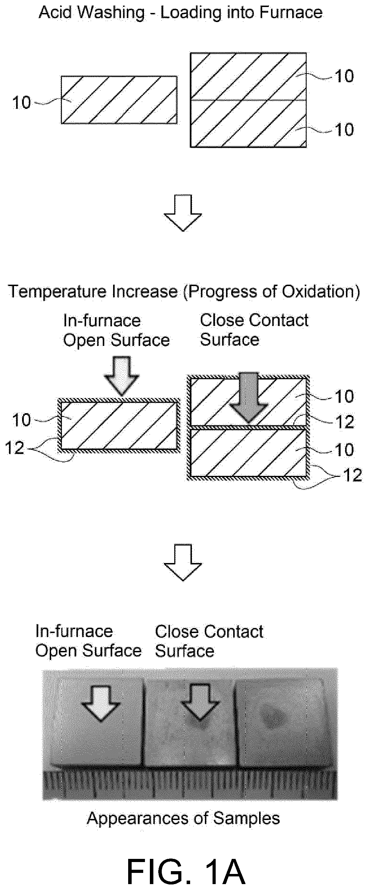

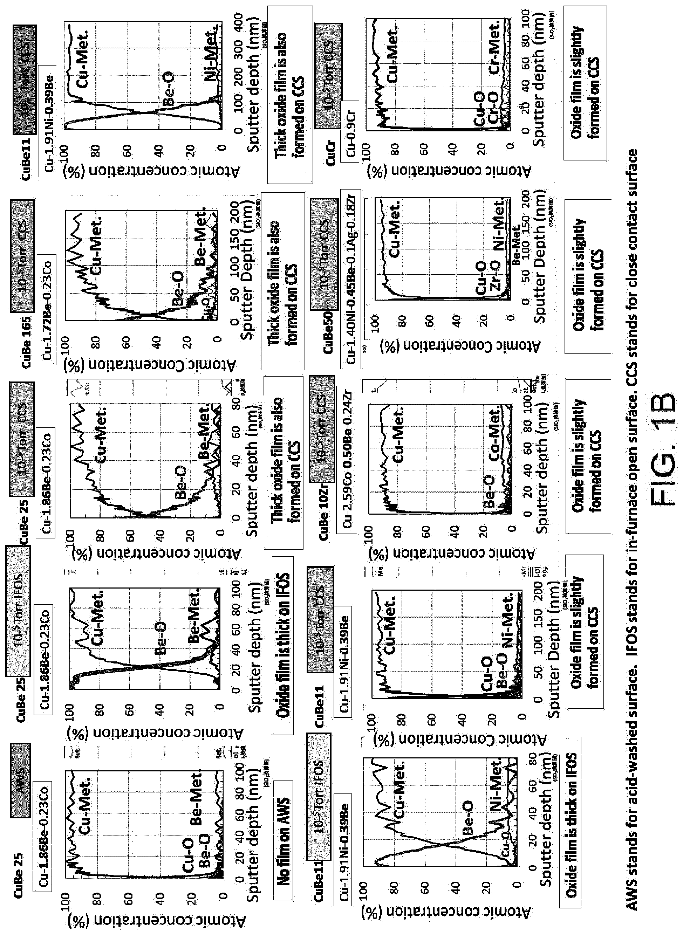

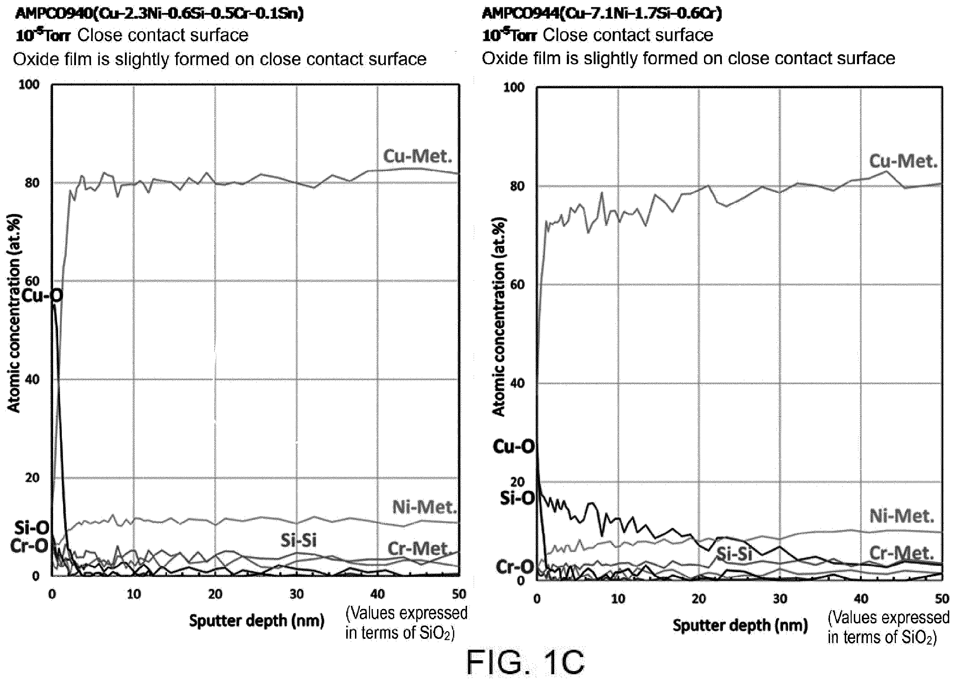

The present inventors have confirmed in the tests prior to the completion of the present invention that when conventionally known diffusion bonding is performed on an age-hardenable copper alloy, a certain bonding strength is obtained, but when solution annealing and aging treatment are performed on a resultant bonded body, the bonding strength is deteriorated and the bonded body is broken in many cases. This phenomenon is remarkable for beryllium copper alloy 25 (JIS C1720), which is known as providing the highest strength among age-hardenable copper alloys. The present inventors have inferred that the cause of this is an oxide film which is not recognized in stainless steel and pure copper and which remains at a bonding surface, and have conducted the following experiment as shown in Figure 1A in order to clarify the mechanism that allows the oxide film to remain. Each alloy shown in Figures 1B and 1C is processed into a plate shape whose size is 15 mm × 15 mm × 5 mm, the top and bottom surfaces having a size of 15 mm × 15 mm of a resultant specimen 10 are then lapped and flattened to make the flatness 0.1 mm or less and make the surface roughness Rzjis 0.8 $\mu$m or less, and the specimen is then washed with 30% nitric acid to remove an oxide film immediately before the test is conducted. Three specimens 10 are prepared for each alloy. As shown in Figure 1A, one of the specimens 10 is placed in a furnace for bonding in a condition of being in contact with a vacuum atmosphere in the furnace, and the other two specimens 10 are stacked and placed in the furnace for bonding in a condition of being in a close contact with each other (like the bonding surfaces in diffusion bonding). After a thermal treatment which is the same as that during diffusion bonding is performed in the furnace for bonding under various reduced pressure conditions, the specimens were taken out, and elemental analysis is performed for each oxide film 12 as the surface layer with an X-ray photoelectron spectrometer (XPS, product name: Quantera SXM, manufactured by ULVAC-PHI, Inc.) while a surface which was in contact with the in-furnace atmosphere (hereinafter, referred to as in-furnace open surface) is etched with argon for the former and each surface where the samples were in close contact with each other (hereinafter, referred to as close contact surface) is etched with argon for the latter.

Figures 1B and 1C show the measurement results for the oxide films of each alloy after the acid washing, after the thermal treatment of the in-furnace open surface, and/or after the thermal treatment of the close contact surfaces. These results show that the oxide films are completely removed by the acid washing in the tests for all the alloys and that a very thick oxide film is formed on each in-furnace open surface even under a high vacuum of $5 \times 10^{-5}$ Torr. With regard to the degree of oxide film formation on the close contact surface, which is an issue in bonding, the following have been confirmed:

i) when the alloys in which the content of beryllium is 0.7% by weight or less (beryllium copper alloy 11, beryllium copper alloy 50, beryllium copper alloy 10Zr, chromium copper alloy, Corson copper AMPCO940, and Corson copper AMPCO944) are treated at a bonding temperature under a high vacuum of $5 \times 10^{-5}$ Torr (the degree of vacuum that is achieved during continuous exhaust with a diffusion pump), an oxide film is not formed or is formed only very slightly,
ii) even for the alloys in which the content of beryllium is 0.7% by weight or less, an oxide film can be formed at a degree of vacuum of about $1 \times 10^{-1}$ Torr due to oxygen which penetrates into the close contact surface, and
iii) even when the alloys in which the content of beryllium is more than 0.7% by weight (beryllium copper alloy 25 and beryllium copper alloy 165) are treated under a high vacuum of $5 \times 10^{-5}$ Torr, an oxide film is formed due to oxygen which penetrates into the close contact surface. The above results show that beryllium has extremely high affinity to oxygen and therefore when the concentration of beryllium is a certain level or higher, it is difficult to suppress the oxide film formation due to oxygen which penetrates between close contact surfaces even if the degree of close contact between members is increased under a high degree of vacuum, so that the content of beryllium has to be taken into consideration in selecting materials in order not to allow the oxide film to remain at the bonding surface.

The age-hardenable copper alloy which is used for the copper alloy bonded body of the present invention is not particularly limited as long as the content of beryllium is 0.7% by weight or less, and may be an age-hardenable copper alloy free from beryllium (that is, having a beryllium content of 0% by weight). A bonded body using a beryllium copper alloy in which the content of Be is high, as high as more than 0.7% by weight, (for example, beryllium copper alloy 25 (JIS alloy number C1720)) cannot withstand solution annealing and an aging treatment because an oxide film at a bonding surface remains remarkably, and therefore is broken at the bonding surface after the solution annealing and the aging treatment. However, by performing diffusion bonding using selectively an age-hardenable copper alloy in which the content of Be is low, as low as 0.7% by weight or less, a copper alloy bonded body that withstands solution annealing and an aging treatment and has an extremely high bonding strength can be realized. Examples of the age-hardenable copper alloy include beryllium copper alloy 11 (JIS alloy number C1751, EN material number CW110C, and UNS alloy number C17510), beryllium copper alloy 10 (EN material number CW104C and UNS alloy number C17500), beryllium copper CuCo1Ni1Be (EN material number CW103C), beryllium copper alloy 14Z, beryllium copper alloy 50, beryllium copper alloy 10Zr, chromium copper (UNS alloy number C18200), chromium zirconium copper (UNS alloy number C18510 and EN material number CW106C), zirconium copper (UNS alloy number C15000, EN material number CW120C), and Corson copper (EN material number CW109C, CW111C, UNS alloy number C19010, C70250, AMPCO944, and AMPCO940), and the age-hardenable copper alloy is more preferably beryllium copper alloy 11. These preferred age-hardenable copper alloys can realize an extremely high bonding strength after solution aging, and is superior in a hydrogen-embrittlement-resistant property and a thermal conductive property as well, and is particularly advantageous as a material for a heat exchanger of a pre-cooler for a hydrogen station. The compositions of the above-described various copper alloys are shown in Table 1 below.

[Table 1]

Table 1

| | JIS Alloy number | UNS Alloy number | EN Material number | Essential elements (% by weight) | Optional elements (% by weight) | Balance |
|---|---|---|---|---|---|---|
| Beryllium copper alloy 11 | C1751 | C17510 | CW110C | Be:0.20~0.60, Ni:1.40~2.20 | Co:0~0.3, Fe:0~0.2 | Cu and Inevitable impurities |
| Beryllium copper alloy 10 | - | C17500 | CW104C | Be:0.40~0.70, Co:2.00~2.80 | Co:0~0.3, Fe:0~0.2 | |
| Beryllium copper CuCo1-Ni1Be | - | - | CW103C | Be:0.4~0.7, Ni:0.8~1.3, Co:0.8~1.3, Fe:0~0.2 | - | |
| Beryllium copper alloy 14Z | - | - | - | Be:0.20~0.60, Ni:1.40~2.40 | Zr:0~0.5 | |
| Beryllium copper alloy 50 | - | - | - | Be:0.20~0.60, Ni:1.40~2.10, Ag:0.1~0.3 | Zr:0~0.5 | |
| Beryllium copper alloy 10Zr | - | - | - | Be:0.40~0.70, Co:2.00~2.80 | Zr:0~0.3 | |
| Chromium copper | - | C18200 | - | Cr.0.7~1.4 | - | |
| Chromium zirconium copper | - | C18510 | CW106C | Cr:0.5~1.2, Zr:0.03~0.3 | Si:0~0.1, Fe:0~0.08 | |
| Zirconium copper | - | C15000 | CW120C | Zr:0.1~0.2 | - | |
| Corson copper CuNi1Si | - | - | CW109C | Ni:1.0~1.6, Si:0.4~0.7 | Fe:0~0.2, Mn:0~0.1, Pb:0~0.02 | |
| Corson copper CuNi2Si | | - | CW111C | Ni:1.6~2.5, Si:0.4~0.8 | Fe:0~0.2, Mn:0~0.1, Pb:0~0.02 | |
| Corson copper C1901 | - | C19010 | - | Ni:1.5~3.0, Si:0.5~1.5, Cr:0.1~1.5 | Sn:0.1~0.3 | |
| Corson copper C7025 | - | C70250 | - | Ni:2.2~4.2, Si:0.25~1.2, Mq:0.05~0.3 | Fe:0-0.2, Zn:0~1.0, Pb:0~0.05 | |
| Corson copper AMPCO944 | - | - | - | Ni:6.5~7.5, Si:1.5~2.5, Cr:0.5~1.5 | - | |
| Corson copper AMPCO940 | - | - | - | Ni:1.5~3.0, Si:0.5~1.5, Cr:0.3~1.5 | Sn:0~0.3 | |

Note) In alloy standards of JIS, UNS, and EN, there are slight differences in upper and lower limit values of respective component standards and in specifications for optional elements, but control values for commercially produced alloys are substantially the same.

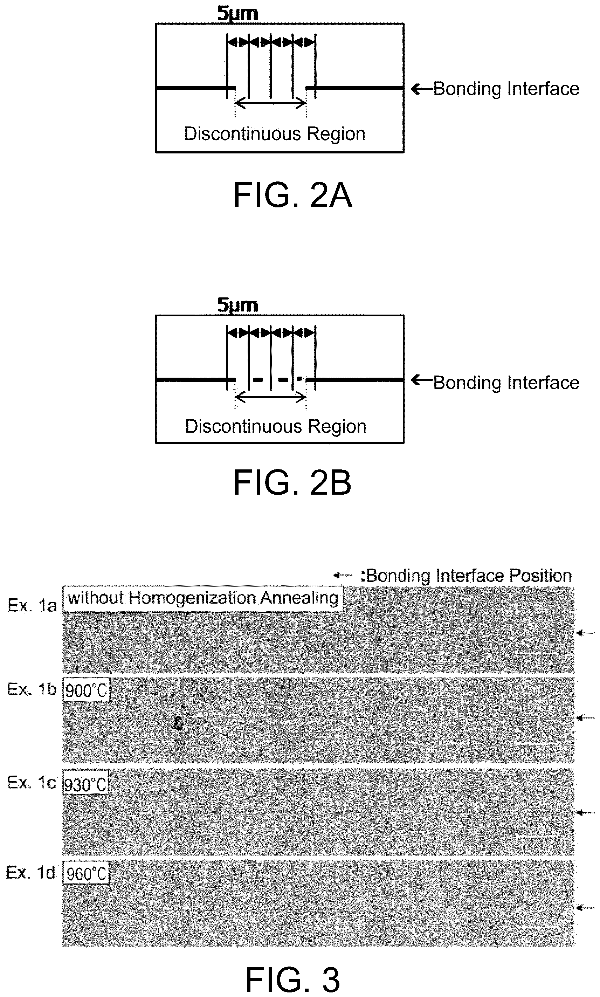

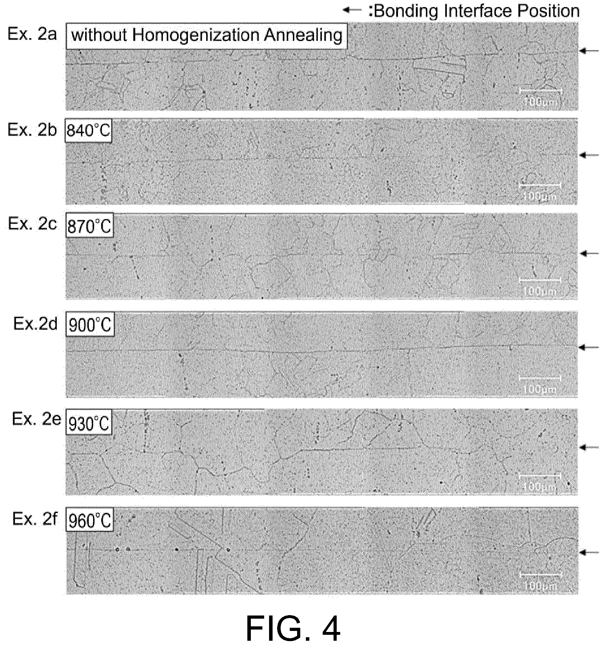

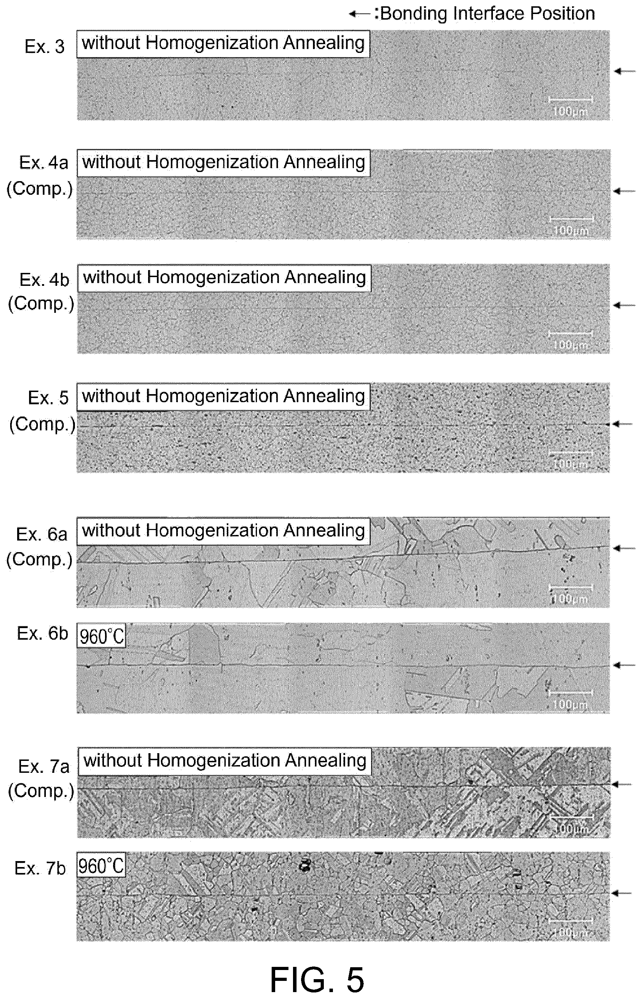

As described above, the bonding interface between the members remains in the copper alloy bonded body of the present invention. Whether the bonding interface has disappeared or remains is decided by observing a section including a bonding part of the copper alloy bonded body with a laser microscope at 200 to 1000 magnifications (see, for example, Figures 3 to 5 described below). Whether the bonding interface has disappeared or remains should be decided according to whether the trace of the bonding surfaces of the copper alloy members before being bonded remains or not. In the copper alloy bonded body of the present invention, in a laser microscope image of a section including the bonding interface, the ratio of a total length of a line segment corresponding to a discontinuous region relative to an entire length of a bonding interface line defined along the bonding interface and a position where the bonding interface was present is 3.5% or more. The section including the bonding interface is preferably, for example, a rectangular section of a size of 1200 μm in long side × 200 μm in short side (provided that the long side is parallel to the bonding interface, and the short side is perpendicular to the bonding interface). As used herein, the term "bonding interface line" refers to a boundary line defined along the bonding interface and the position where the bonding interface was present in a laser microscope image (desirably a depth composition image synthesized with a laser microscope) (section observation image). The bonding interface line is a single continuous line composed of residual line segments determined based on the remaining bonding interface and virtual line segments determined by extrapolating the residual line segments to regions where the bonding interface has disappeared. That is, the bonding interface line can be defined by connecting the line segments of the remaining bonding interface, and extrapolating these residual line segments to the portions where the bonding interface has disappeared to form a single continuous line. Therefore, the term "bonding interface line" as used herein is used distinctly from the term "bonding interface".

The discontinuous region is defined as a region where, when a plurality of perpendicular lines is drawn with respect to the bonding interface line at a pitch of 5 μm, three or more adjacent perpendicular lines do not intersect with the remaining bonding interface, as shown schematically in Figures 2A and 2B. That is, the discontinuous region may be a region where the bonding interface has completely disappeared and as a result, three or more adjacent perpendicular lines do not intersect with the bonding interface, as shown in Figure 2A, or may be a region where the bonding interface is broken intermittently and as a result, three or more adjacent perpendicular lines do not intersect with the bonding interface, as shown in Figure 2B. While there are no remains or traces of the bonding interface in the former discontinuous region (Figure 2A), there are remains or traces of the bonding interface in the latter discontinuous region (Figure 2B), without intersecting with the three or more perpendicular lines. The presence of this discontinuous region contributes to the realization of an extremely high bonding strength. The presence of the discontinuous region reduces the ratio of an oxide at the interface, which is considered to contribute to improving the bonding strength. The ratio of a total length of a line segment corresponding to a discontinuous region relative to an entire length of a bonding interface line is 3.5% or more, preferably 4.5% or more, more preferably 7.5% or more, still more preferably 10% or more. The upper limit of the ratio of a total length of a line segment corresponding to a discontinuous region is not particularly limited, but is typically 80% or less, more typically 70% or less, still more typically 50% or less, particularly typically 30% or less.

Therefore, the copper alloy bonded body of the present invention has an extremely high bonding strength. That is, the ratio of a total length of a discontinuous region relative to an entire length of a bonding interface line in a section observation image is 3.5% or more, which reduces the number of crack initiation points or reduces the crack propagation rate during a tensile test, resulting in the realization of an extremely high bonding strength. Specifically, a strength of the bonding part of the copper alloy bonded body is preferably 70% or more, more preferably 85% or more, still more preferably 90% or more, particularly preferably 95% or more of a strength of the base material of the copper alloy bonded body. This strength is assumed to be the value at 25°C; however, the strength within the above-described range is preferably realized even at -196°C in that the bonding strength can be maintained even under extremely low temperature conditions, such as liquid hydrogen or liquid oxygen. Therefore, the bonding part of the copper alloy bonded body preferably has a bonding strength that is 85% or more, more preferably 90% or more, still more preferably 95% or more of a strength of the base material of the copper alloy bonded body at a temperature of -196°C. The strength of the bonding part of the copper alloy bonded body is desired to be higher, and thus the upper limit is not particularly limited, but is typically 100% or less of the strength of the base material of the copper alloy bonded body. The above-described strength is typically the strength after the solution annealing and aging treatment. The strength of each of the base material and the bonding part of the copper alloy bonded body can be measured by preparing a specimen in accordance with ASTM E8M Specimen 3 in such a way that the bonding part is at the central position of the specimen and performing a tensile test following the procedures in accordance with ASTM E8M on the specimen.

The bonding part of the copper alloy bonded body preferably has a charpy impact value that is 15% or more, more preferably 25% or more, still more preferably 60% or more of a charpy impact value of the base material of the copper alloy bonded body at each temperature of 25°C and -196°C. In this way, when the charpy impact value is within the above-described range not only at room temperature but also at -196°C, desired performance of the copper alloy bonded body can be maintained even under extremely low temperature conditions, such as liquid hydrogen or liquid oxygen. The charpy impact value of the bonding part of the copper alloy bonded body is desired to be higher, and thus the upper limit is not particularly limited, but is typically 80% or less, more typically 70% or less, still more typically 60% or less of the charpy impact value of the base material of the copper alloy bonded body. The charpy impact values of the base material and the bonding part of the copper alloy bonded body can be measured in accordance with JIS Z 2242: 2018, following the procedures described in the Examples below.

An oxide film can be present at the bonding interface of the copper alloy bonded body of the present invention. The oxide film typically has a thickness of 0 nm or more and 5.0 nm or less, preferably 0 nm or more and 4.0 nm or less, more preferably 0 nm or more and 3.0 nm or less, still more preferably 0 nm or more and 2.0 nm or less, particularly preferably 0 nm or more and 1.5 nm or less, most preferably 0 nm or more and 1.0 nm or less. Such a thin oxide film provides a copper alloy bonded body that withstands the solution annealing and aging treatment and has an extremely high bonding strength after the aging treatment in the case where the bonding interface remains as well as the case where the bonding interface has disappeared. With regard to the thickness of the oxide film at the bonding interface, a section including the bonding interface is observed with a scanning transmission electron microscope (STEM) to acquire element mapping images at the section by electron energy loss spectroscopy (EELS)/energy dispersive X-ray analysis (EDX), the STEM image and the EELS/EDX element mapping images are collated, and thereby the oxide film can be specified and the thickness of the oxide film can be determined. Note that the oxide film present at the bonding interface is not always a layered film but a film of grains (that is, oxide grains) in some cases, and when the oxide film is a film of grains, the thickness of the oxide film includes the height of the oxide grains.

The copper alloy bonded body of the present invention can contain crystal grains of the age-hardenable copper alloy grown beyond the bonding interface or the position (former bonding interface) where the bonding interface was present. That is, the copper alloy bonded body of the present invention has, at the bonding interface or the former bonding interface, a structure formed in such a way that crystal grains which were present at the bonding surface of the copper alloy members before being bonded have recombined and recrystallized after bonding, and a phenomenon such that the bonding interface has changed from what it initially was at the time of bonding can be observed. The copper alloy bonded body, when having such a fine bonding structure, is more superior in bonding strength.

In the copper alloy bonded body of the present invention, a residual component derived from a material other than the age-hardenable copper alloy is preferably absent at the bonding interface or the position (former bonding interface) where the bonding interface was present from the viewpoint of securing a high bonding strength equal to the strength of the base material and a hydrogen-resistant property equal to that of the base material. Accordingly, the copper alloy bonded body of the present invention is desirably free from a bonding agent, such as a brazing filler metal, at the bonding interface. That is, the copper alloy bonded body of the present invention preferably consists of the age-hardenable copper alloy and inclusions composed of an oxide, a carbide, and/or an intermetallic compound derived from the age-hardenable copper alloy.

The base material and the bonding part of the copper alloy bonded body after the solution annealing and aging treatment preferably have a strength of 520 MPa or higher, more preferably 690 MPa or higher. The copper alloy bonded body having such a strength sufficiently satisfies criteria required in high-strength applications including uses of the copper alloy bonded body as a heat exchanger of a pre-cooler for a hydrogen station. The strength is desired to be high, and therefore the upper limit value of the strength should not be specified, but the base material and the bonding part of the copper alloy bonded body of the present invention, in which the content of beryllium is 0.7% by weight or less, after the solution annealing and aging treatment typically have a strength of 895 MPa or lower. The strength of the base material and the bonding part of the copper alloy bonded body before and after the solution annealing and aging treatment can be measured by preparing a specimen in accordance with ASTM E8M Specimen 3 in such a way that the bonding part is at the central position of the specimen and performing a tensile test following the procedures in accordance with ASTM E8M on the specimen.

The thermal conductivity of the base material including the bonding part of the copper alloy bonded body is desired to be high. Thermal conductance as well as electrical conductance is energy transfer based on conduction electrons, therefore there is a correlation between the two called the Wiedemann-Franz law, and the thermal conductivity and the electrical conductivity that is more simply measurable can be mutually converted. The base material including the bonding part of the copper alloy bonded body preferably has a thermal conductivity (and a converted electrical conductivity) of 209 W/mK or more (50 IACS% or more in terms of electrical conductivity), more preferably 228 W/mK or more (55 IACS% or more in terms of electrical conductivity), still more preferably 246 W/mK or more (60 IACS% or more in terms of electrical conductivity). Such a high thermal conductivity is advantageous when the copper alloy bonded body is used for a heat exchanger in that the heat exchange efficiency is extremely high (for example, a SUS316L Ni equivalent product which is superior in a property to hydrogen and therefore currently used for a heat exchanger of a pre-cooler has a very low thermal conductivity, as low as 16 W/mK, and the poor heat exchange efficiency is an operational drawback.). The thermal conductivity is desired to be high, and therefore the upper limit value of the thermal conductivity should not be specified, but the base material that includes the bonding part of the copper alloy bonded body of the present invention, in which the content of beryllium is 0.7% by weight or less, and that can secure a strength of 520 MPa or higher for the base material and the bonding part typically has a thermal conductivity of 280 W/mK or less.

The copper alloy bonded body including the bonding part preferably has a tensile strength of 520 MPa or higher, more preferably 690 MPa or higher, in a hydrogen gas in a slow strain rate tensile (SSRT: Slow Strain Rate Tensile) test performed at a strain rate in a range of $5 \times 10^{-5}$ s$^{-1}$ or less (for example, $5 \times 10^{-5}$ s$^{-1}$). This copper alloy bonded body including the bonding part is superior in the hydrogen-embrittlement-resistant property and has a high tensile strength. This slow strain rate tensile test is performed in accordance with ASTM-G-142. The slow strain rate tensile test may be performed using, for example, a standard-size specimen (smooth specimen). Generally, with a smooth specimen, the sensitivity to hydrogen is evaluated by relative tensile strength RTS or relative reduction of area RRA obtained by dividing tensile strength or reduction of area in a hydrogen gas by tensile strength or reduction of area in a reference gas which is free from an influence of hydrogen. In the slow strain rate tensile test for a smooth specimen, measurement may be performed at a strain rate of, for example, $5 \times 10^{-5}s^{-1}$. This slow strain rate tensile test is performed at a hydrogen gas pressure of 95 MPa or higher assuming a 70 MPa-class FCV (fuel cell vehicle) or hydrogen station. When the hydrogen gas pressure is higher, the amount of hydrogen which penetrates into a material increases more, and therefore the specimen is more likely to be susceptible to an influence due to hydrogen exposure and the hydrogen brittleness can be evaluated more properly. In the tests regarding the present application, it is preferable to evaluate the property to hydrogen using standard-size specimens (smooth specimens) by the relative tensile strength RTS or the relative reduction of area RRA. For example, the copper alloy bonded body may be cut out to prepare a specimen in accordance with ASTM E8M Specimen 4 in such a way that the bonding part is at the central position of the specimen.

As for the copper alloy bonded body including a bonding part, when the tensile strength is 520 MPa or higher, desirably 690 MPa or higher, in the slow strain rate tensile test, the relative reduction of area RRA is preferably 0.8 or more, more preferably 0.9 or more. In addition, the relative tensile strength RTS is preferably 0.8 or more, more preferably 0.9 or more. That the value of the tensile strength of the copper alloy bonded body including a bonding part is within the above-described range at normal temperature under the air or a hydrogen gas pressure of 95 MPa or higher and the RRA and RTS of the copper alloy bonded body including a bonding part also satisfy the values within the above-described ranges means that this copper alloy bonded body has a high strength and is superior in the hydrogen-embrittlement-resistant property, and therefore is particularly suitable for uses thereof as a heat exchanger of a pre-cooler for a hydrogen station. The tensile strength is desired to be high, and therefore the upper limit value of the tensile strength should not be specified, but the copper alloy bonded body of the present invention, in which the content of beryllium is 0.7% by weight or less, typically have a tensile strength of 895 MPa or lower at normal temperature under the air or a hydrogen gas pressure of 95 MPa or higher in the slow strain rate tensile test.

The copper alloy bonded body may include a flow passage space inside as one embodiment. In this case, the flow passage space can be utilized as an internal space for allowing a medium, such as hydrogen or a refrigerant, to pass. Accordingly, the copper alloy bonded body including a flow passage space can preferably be used for uses thereof as a heat exchanger of a pre-cooler for a hydrogen station, which is desired to include a plurality of flow passage spaces for allowing hydrogen and a refrigerant to pass respectively.

Production Method

The copper alloy bonded body of the present invention can be produced by sequentially performing smoothening (arbitrary step) of bonding surfaces as necessary, removing an oxide film, bonding by hot pressing (diffusion bonding), a homogenization treatment (arbitrary step) as necessary, solution annealing, and an aging treatment on a plurality of members made of an age-hardenable copper alloy. Specifically, the production method is as follows.

(a) Providing Copper Alloy Members

First of all, a plurality of members made of an age-hardenable copper alloy to be used for bonding is provided. As this age-hardenable copper alloy, an age-hardenable copper alloy that is as described above, wherein the content of beryllium is 0.7% by weight or less, can be used. As the uppermost surface material and lowermost surface materials of a stacked- and-bonded body to be produced as a heat exchanger, a rolled material or a forged material is preferably used, and as a plurality of laminating materials which are other than the uppermost surface material and lowermost surface materials and which have or do not have a cooling water passage inside, a rolled material is preferably used.

A copper alloy material which does not cause deterioration in properties due to hydrogen is preferably used for the copper alloy bonded body of the present invention. With regard to copper alloy materials, it has been known that the deterioration in properties to hydrogen is remarkable in, for example, cupronickel (Cu-10% to 30%) in which the concentration of Ni is 20% or more and that the deterioration in properties to hydrogen also remarkably occurs in tough pitch copper (undeoxidized pure copper). Thus, desirably, in selecting a copper alloy which is used for the copper alloy bonded body of the present invention, a slow strain rate tensile test (for example, at a displacement rate of 0.001 mm/sec (a strain rate of 0.00005/sec) for smooth specimens in accordance with ASTM-G-142), is performed in each of the atmospheres in the air and under high-pressure hydrogen (for example, in 95 MPa hydrogen), and test result in the air and the test result under high-pressure hydrogen are compared to thereby confirm that the copper alloy is a copper alloy material which does not cause deterioration under hydrogen. For example, the copper alloy bonded body of the present invention is preferably prepared using a copper alloy member having an RRA (relative reduction of area) of 0.8 or more, more preferably 0.9 or more, in a hydrogen gas, measured in the slow strain rate tensile test performed at a strain rate of $5 \times 10^{-5} s^{-1}$ or less.

A plurality of the members made of an age-hardenable copper alloy to be used for bonding need to have a flat surface to be bonded having a flatness of 0.1 mm or less and an arithmetic mean roughness Ra of 3.0 $\mu$m or less. That is, as described above, to suppress the re-oxidation on the bonding surfaces in bonding by hot pressing (diffusion bonding) even though an oxide film on each surface of bonding members is removed, the close contact property between the bonding surfaces needs to be secured in such a way that oxygen atoms which penetrate into the bonding surfaces sufficiently decrease even under a high-vacuum atmosphere, and this close contact property can be secured when the bonding surfaces have a flatness and an Ra within the above-described ranges. When the members to be bonded are rolled materials, the rolled materials satisfy the flatness and the Ra within the above-described ranges in many cases, and therefore a special smoothening step is unnecessary. On the other hand, when the flatness and the Ra within the above-described ranges are not satisfied, flat surfaces having a flatness and an Ra within the above-described ranges are formed by polishing, cutting, and/or another method. Note that curl or the like is seen for a plate material in some cases, which is not a problem as long as the plate thickness accuracy is favorably adjusted, and, in applying a necessary load in bonding by hot pressing (diffusion bonding), the flatness is 0.1 mm or less and an intended close contact property can be secured. Note that the arithmetic mean roughness Ra is the surface roughness specified in JIS B 0601-2001. The flat surface has an arithmetic mean roughness Ra of 3.0 $\mu$m or less, preferably 1.0 $\mu$m or less, more preferably 0.50 to 1.0 $\mu$m, still more preferably 0.10 to 0.50 $\mu$m. In addition, the flatness herein is a parameter defined as "magnitude of deviation in a planar form from a geometrically correct plane (geometric plane)" in JIS B 0621-1984, and when an object is sandwiched by a pair of planes, the flatness means a value of the width of the object.

Prior to removing the oxide film, which is a step that follows, a groove that provides a flow passage space after bonding is preferably formed as necessary on each surface to be bonded of a plurality of the members. The formation of the groove may be performed by any of various known methods, such as etching, press working, and mechanical processing. When such a groove is formed, thereby the members can be used for producing a copper alloy bonded body including a flow passage space inside, as described above. For example, copper ally plates with a groove and copper alloy plates without a groove are alternately stacked, and the copper alloy plates are bonded, thereby making it possible to produce a copper alloy laminated body in which many flow passages are formed. The multilayer bonded body having such a configuration can preferably be used for uses thereof as a heat exchanger of a pre-cooler for a hydrogen station, which is desired to include a plurality of flow passage spaces for allowing hydrogen and a refrigerant to pass respectively.

(b) Removing Oxide Film

As described above, an oxide film is present at each surface of the copper alloy members. Therefore, the oxide film present at each surface to be bonded of the copper alloy members is removed. Removing the oxide film is preferably performed by washing the surface to be bonded of the copper alloy members with an inorganic acid solution in that the oxide film can be removed effectively. Examples of the inorganic acid solution include nitric acid, sulfuric acid, a chemical polishing solution, hydrochloric acid, a kirinsu bath, and hydrofluoric acid, and the inorganic acid solution is particularly preferably a nitric acid. Note that the chemical polishing solution is an acid obtained by adding hydrogen peroxide that is an oxidizing agent to sulfuric acid, and the kirinsu bath is a mixed acid of sulfuric acid, nitric acid, and hydrochloric acid, in which a small amount of sodium hydroxide is added in some cases. Examples of preferred mixing ratios in the kirinsu bath include sulfuric acid :nitric acid :hydrochloric acid = 61:4:4, 81:1:0.02, or 11:1:0.02. Alternatively, removing the oxide film may also be performed by mechanical polishing, or by a combination of mechanical polishing and washing with an inorganic acid solution.

(c) Bonding by Hot Pressing (Diffusion Bonding)

A plurality of the copper alloy members is bonded by hot pressing to make an intermediate bonded body. This bonding can be performed in accordance with a diffusion bonding method. For example, the hot pressing is preferably performed by applying a pressure of 5.0 MPa or higher (preferably 10 MPa or higher) at a temperature of 500 to 1050°C for 30 to 480 minutes in a furnace wherein a degree of vacuum is higher than $1.0 \times 10^{-2}$ or higher (that is, pressure is lower than $1.0 \times 10^{-2}$ Torr). However, when the age-hardenable copper alloy is free of Be (for example, Corson copper), the hot pressing can be performed by applying a pressure of 5.0 MPa or higher at a temperature of 500 to 1050°C for 30 to 480 minutes in a furnace wherein a degree of vacuum is equal to or higher than $1.0 \times 10^{-1}$ Torr (that is, pressure is equal to or lower than $1.0 \times 10^{-1}$ Torr). In any case, this hot pressing is performed in such a way that the amount of deformation in length of each copper alloy member in the direction of pressurization during bonding is preferably 0.5% or more and 35% or less, more preferably 0.5% or more and 30% or less, still more preferably 1% or more and 20% or less, particularly preferably 2% or more and 8% or less. There are proper combinations in the hot-pressing temperature and pressure, and the combination is preferably such that when the temperature is higher than 840°C and 1050°C or lower, the pressure is 5.0 MPa or higher and 20 MPa or lower, when the temperature is higher than 720°C and 840°C or lower, the pressure is 2 MPa or higher and 24 MPa or lower, and when the temperature is 600°C or higher and 720°C or lower, the pressure is 4 MPa or higher and 50 MPa or lower. The time for the hot pressing is preferably 15 to 480 minutes, more preferably 30 to 150 minutes, still more preferably 30 to 60 minutes. Note that the degree of vacuum in the furnace during the hot pressing is preferably lower than $1.0 \times 10^{-3}$ Torr, more preferably lower than $1.0 \times 10^{-4}$ Torr, still more preferably lower than $5.0 \times 10^{-5}$ Torr, from the viewpoint of suppressing progress of oxidation.

Particularly when a groove is formed on the surface of the copper alloy member to allow the intermediate bonded body to have a flow passage space, the hot pressing is preferably performed at a relatively low temperature and a relatively high pressure in that the hot pressing can be controlled in such a way as to make crush of the flow passage due to the pressing slight. Specifically, the hot pressing in this aspect is preferably performed in a furnace wherein the degree of vacuum is higher than $1.0 \times 10^{-2}$ Torr (that is, pressure is lower than $1.0 \times 10^{-2}$ Torr), more preferably in a furnace wherein the degree of vacuum is higher than $1.0 \times 10^{-4}$ Torr (that is, pressure is lower than $1.0 \times 10^{-4}$ Torr), by

(i) applying a pressure of 1 MPa or higher and 4 MPa or lower at a temperature of higher than 840°C and 930°C or lower for 30 to 480 minutes (preferably 30 to 60 minutes),
(ii) applying a pressure of 2 MPa or higher and 8 MPa or lower at a temperature of higher than 720°C and 840°C or lower for 30 to 480 minutes (preferably 30 to 60 minutes), or
(iii) applying a pressure of 4 MPa or higher and 30 MPa or lower at a temperature of 600°C or higher and 720°C or lower for 30 to 480 minutes (preferably 30 to 60 minutes).

(d) Homogenization Treatment (Arbitrary Step)

When a groove is formed on the surface of the copper alloy member to allow the intermediate bonded body to have a flow passage space and the hot pressing is performed at a relatively low temperature and a relatively high pressure, it is preferable to perform, prior to the solution annealing, on the intermediate bonded body, a homogenization treatment at a temperature of 900 to 1050°C for 60 to 480 minutes in a furnace wherein a degree of vacuum is preferably higher than $1.0 \times 10^{-1}$ Torr (that is, pressure is lower than $1.0 \times 10^{-1}$ Torr) or in a furnace preferably under an atmosphere (inert atmosphere) of nitrogen or another non-oxidizing gas (at normal pressure or reduced pressure). The homogenization treatment is a treatment also called homogenization annealing, but the term of homogenization treatment is used herein. That is, when the hot pressing is performed at a relatively low temperature and a relatively high pressure, bonding interfaces are likely to remain, but performing the homogenization treatment enables reduction or disappearance of the bonding interfaces, and through the subsequent solution annealing and aging treatment, an extremely high bonding strength can be realized. That is, both suppression of crush of a flow passage and high bonding strength can be realized. The homogenization treatment is preferably performed in the air atmosphere wherein the pressure is lower than $1.0 \times 10^{-1}$ Torr or lower, or at normal pressure, or in an inert atmosphere, such as in nitrogen, wherein the pressure is reduced to lower than $1.0 \times 10^{-1}$ Torr, in order to suppress progress of oxidation. The homogenization treatment temperature is preferably 900 to 1050°C, more preferably 930 to 1000°C, still more preferably 960 to 990°C. The holding time at the homogenization treatment temperature is 60 to 480 minutes, more preferably 60 to 360 minutes, still more preferably 60 to 240 minutes. It is needless to say that even when grooves are not formed on the surfaces of the copper alloy members, the homogenization treatment may be performed as necessary.

Note that the bonding by hot pressing (diffusion bonding) (c) and the homogenization treatment (d) are preferably performed continuously by releasing a pressing load without decreasing the temperature in the furnace; and increasing the temperature. When (c) and (d) are performed in such a manner, thereby the bonding by hot pressing (diffusion bonding) and the homogenization treatment can be performed as a series of continuous operations without performing pressurization to crush a flow passage space in such a way that the homogenization treatment at a temperature effective for homogenization of textures can be performed after the bonding by hot pressing (diffusion bonding) is performed under a temperature and pressurization condition not to crush a flow passage space excessively, which is advantageous not only from the viewpoint of improving reliability of the bonding parts but also from the economical viewpoint.

(e) Solution Annealing

The solution annealing is performed on the intermediate bonded body. This solution annealing is preferably performed by heating the intermediate bonded body in a furnace, such as an atmospheric furnace, a non-oxidizing atmospheric furnace, or a salt bath furnace, at a temperature of 700 to 1100°C for 1 to 180 minutes, and then cooling the intermediate bonded body with water. The copper alloy which is used in the present invention is an age-hardenable alloy and can exhibit optional tempered properties (for example, a high strength), especially an extremely high bonding strength, through the solution annealing and the subsequent aging treatment which are performed after the bonding interface is made to disappear or the thickness of the oxide film at the bonding interface is adjusted to a certain level or lower. The solution annealing temperature is preferably 700 to 1100°C, more preferably 800 to 1050°C, still more preferably 900 to 1000°C, although the proper region is somewhat different depending on the alloy composition. The substantial holding time at the solution annealing temperature is preferably 1 to 180 minutes, more preferably 5 to 90 minutes, still more preferably 10 to 60 minutes.

(f) Aging Treatment

The aging treatment is performed on the solution-annealed intermediate bonded body. This aging treatment is preferably performed at 350 to 550°C for 30 to 480 minutes although the proper range is somewhat different depending on the alloy composition. As described above, the age-hardenable alloy, such as a beryllium copper alloy, can exhibit optional tempered properties (for example, a high strength), especially an extremely high bonding strength, through the solution annealing and the aging treatment. The aging treatment temperature is preferably 350 to 550°C, more preferably 400 to 500°C, still more preferably 450 to 480°C. The holding time at the aging treatment temperature is preferably 30 to 480 minutes, more preferably 30 to 300 minutes, still more preferably 60 to 240 minutes, particularly preferably 90 to 180 minutes. From the viewpoint of suppression of oxidation, the aging treatment is preferably performed in a furnace wherein the degree of vacuum is higher than $1.0 \times 10^{-1}$ Torr (that is, pressure is lower than $1.0 \times 10^{-1}$ Torr) or in a furnace under a non-oxidizing atmosphere, such as nitrogen.

EXAMPLES

The present invention will be described more specifically by the following Examples.

Examples 1a to 7b

Copper alloy bonded bodies were prepared according to the following procedures to perform evaluations.

(1) Providing Copper Alloys

In each Example, a plurality of copper alloy members was provided which were composed of the alloy types and compositions shown in Table 2 and had the following forms:

- two copper alloy round bars of a size of 80 mm in diameter × 50 mm in length (Examples 1a to 1d and 6a to 7b)
- two forged materials (rectangular bars or rectangular parallelepiped blocks) of a size of 160 mm × 280 mm × 50 mm in length (thickness) (Examples 2a to 3)
- two forged materials (rectangular bars or rectangular parallelepiped blocks) of a size of 150 mm × 220 mm × 25 mm in length (thickness) and ten rolled materials (rectangular plates) of a size of 150 mm × 220 mm × 1.3 mm in thickness (Examples 4a and 4b)
- two forged materials (rectangular bars or rectangular parallelepiped blocks) of a size of 50 mm × 50 mm × 40 mm in length (thickness) and four rolled materials (rectangular plates) of a size of 50 mm × 50 mm × 1.3 mm in thickness (Example 5)

The surface (hereinafter, referred to as bonding surface) to be used for bonding each copper alloy member was made into a flat surface having an arithmetic mean roughness Ra of less than 3.0 μm, measured in accordance with JIS B 0601-2001, and having a flatness of 0.1 mm or less, measured in accordance with JIS B 0621-1984, by processing, such as lathe machining or lapping. The average values of arithmetic mean roughness Ra measured for bonding surfaces after the surface treatment were as shown in Table 2. Note that in the case of two copper alloy round bars or two forged materials (Examples 1a to 3 and 6a to 7b), the average value of Ra on the bonding surface of an upper bar and Ra on the bonding surface of a lower bar was used as the representative value of Ra shown in Table 2. In the case of two forged materials and ten or four rolled materials (Examples 4a, 4b and 5), the average value of Ra on the bonding surface of an upper plate and Ra on the bonding surface of a lower plate at one bonding position of the ten or four rolled materials was used as the representative value.

(2) Removing Oxide film

The bonding surface of each copper alloy member was washed with 30% nitric acid to remove an oxide film present at the bonding surface.

(3) Hot Pressing

In Examples 1a to 3 and 6a to 7b, bonding surfaces of the two copper alloy round bars or two forged materials washed with nitric acid were made to directly butt against each other (without interposing a brazing filler metal) to perform hot pressing in a vacuum furnace under bonding conditions shown in Table 2 to provide intermediate bonded body in the form of a round bar or a rectangular bar. In Examples 4a, 4b, and 5, bonding surfaces of the two copper alloy forged materials (rectangular bars) washed with nitric acid were made to butt against each other (without interposing a brazing filler metal), with the ten (Examples 4a and 4b) or four (Example 5) copper alloy rolled materials (rectangular plates) being interposed between the bonding surfaces, to perform hot pressing in a vacuum furnace under bonding conditions shown in Table 2 to provide intermediate bonded body in the form of a rectangular bar. The amount of deformation ΔL during bonding on that occasion was determined by the following formula:

$$\Delta L = [(L_0 - L_1)/L_0] \times 100$$

assuming the integrated length in the bonding direction of the copper alloy members before bonding to be $L_0$ and assuming the length in the bonding direction of the samples after bonding to be $L_1$, and the results were as shown in Tables 2. For each Example, in order to perform respective evaluations, a plurality of tensile test specimens was prepared.

(4) Homogenization Treatment (only in Examples 1b to 1d, 2b to 2f, and 6b and 7b)

In Examples 1b to 1d, 2b to 2f, and 6b and 7b, prior to the subsequent solution annealing, homogenization treatments (high-temperature soaking) at the temperatures shown in Table 3 were performed for 8 hours on the intermediate bonded bodies subjected to the hot pressing, and the intermediate bonded bodies were cooled in a furnace.

(5) Solution Annealing

The solution annealing was performed on the intermediate bonded bodies obtained in (2) or (3) above. This solution annealing was performed by holding the copper alloy bonded bodies in a molten salt bath at 930°C for 5 minutes and then cooling the copper alloy bonded bodies with water.

(6) Aging Treatment

An aging treatment was performed on the solution-annealed intermediate bonded bodies. This aging treatment was performed by holding the copper alloy bonded bodies in a vacuum furnace wherein the degree of vacuum was $1 \times 10^{-1}$ Torr at 450°C for 3 hours (in Examples 1a to 5), or at 500°C for 2 hours (in Examples 6a to 7b), and then cooling the copper alloy bonded bodies in the furnace. Thus, copper alloy bonded bodies in the form of a round bar or a rectangular bar, tempered by the solution annealing and the aging treatment (Examples 1a, 2a, 3 to 6a, and 7a) or by the homogenization treatment, the solution annealing, and the aging treatment (Examples 1b to 1d, 2b to 2f, 6b, and 7b), were provided.

(7) Evaluations

The following evaluations were performed for the intermediate bonded bodies as bonded by the hot pressing, and the copper alloy bonded bodies obtained in the aging treatment (hereinafter, there are collectively referred to as bonded body samples).

<Bonding Strength>

Each bonded body sample was processed to prepare a specimen in accordance with ASTM E8M Specimen 3 in such a way that the bonding part was at the central position of the specimen. A tensile test was performed on this specimen at 25°C and/or -196°C in accordance with ASTM E8M to measure the tensile strength (bonding strength), and then the breaking position was checked. The results were as shown in Tables 3 and 4.

<Observation of Section of Bonding Part with Laser Microscope>

For the bonded body samples on which the solution annealing and the aging treatment had further been performed after bonding, a section including the bonding part was cut out and polished. As a sample for observation, each region which was adjacent to the region cut out as a tensile test specimen as described above and had been subjected to the same thermal treatment step for bonding was utilized. The obtained section was etched with a mixed solution of a 30 to 36% hydrogen peroxide solution and a 29% aqueous ammonia solution, and then the microstructure of the bonded body was observed with a laser microscope (VK-X100, manufactured by KEYENCE) at 500 magnifications to check the remaining bonding interface. This image was processed using an automatic image concatenation function to obtain an image for image analysis. On that occasion, a laser microscope image (depth composition image synthesized with the laser microscope) was formed so as to contain a rectangular section of a size of 1200 μm in long side × 200 μm in short side (provided that the long side is parallel to the bonding interface, and the short side is perpendicular to the bonding interface). Figures 3 to 5 show section images obtained in Examples 1a to 7b.

<Ratio of Discontinuous Region on Bonding Interface Line>

The laser microscope image obtained above was analyzed using the image analysis software ImageJ, following the operation procedures described below, to determine the ratio (%) of a total length of a line segment corresponding to a discontinuous region relative to an entire length of a bonding interface line.

(Operation Procedures in ImageJ)

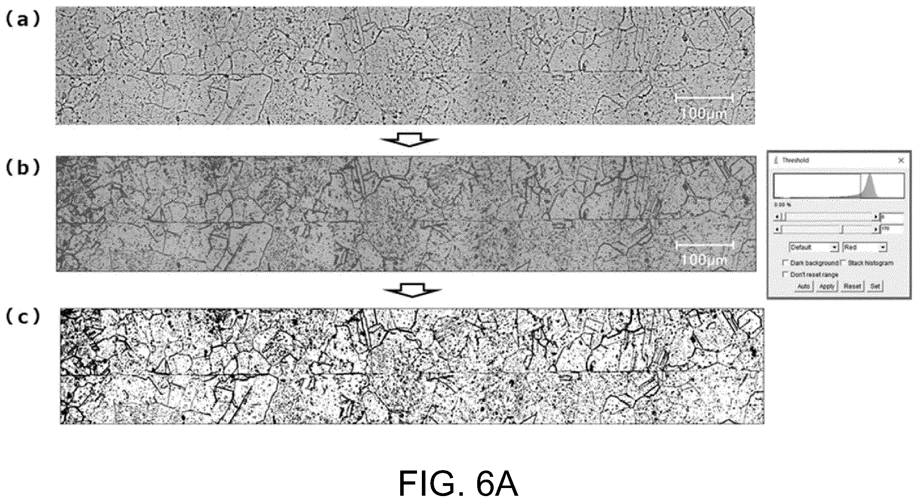

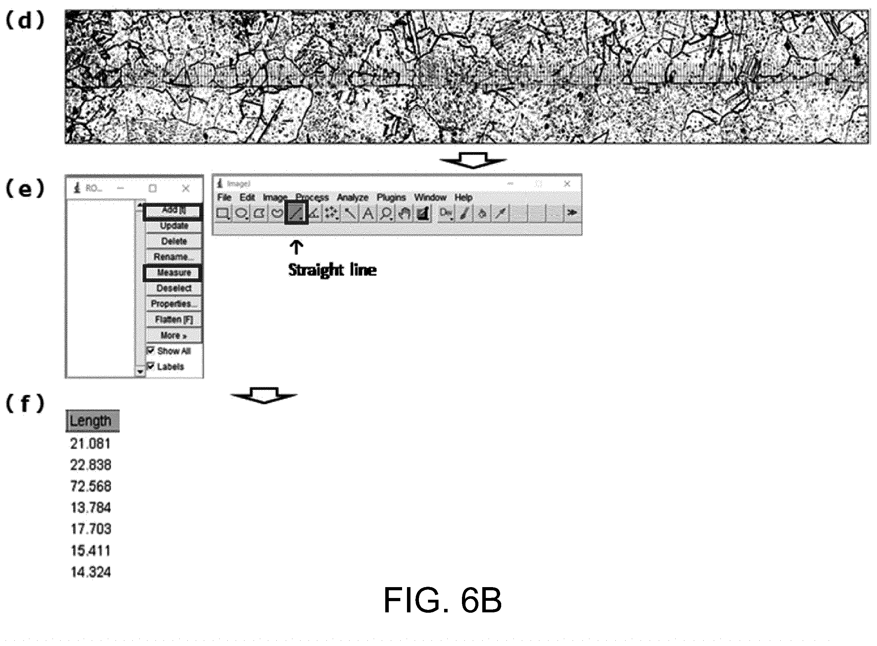

- Step 1: Import a laser microscope image into the image analysis software ImageJ (see Figure 6A (a)).
- Step 2: Cut out a 1200 $\mu$m $\times$ 200 $\mu$m area including the bonding interface (this area is referred to as "region of interest").
- Step 3: Select the "Image" $\to$ "Type" $\to$ "16-bit" commands in this order to convert the image to "16-bit".
- Step 4: Select the "Process" $\to$ "Filters" $\to$ "Gaussian Blur" commands in this order, and adjust the value of "Sigma (Radius)" (to, for example, 0.1) with the Gaussian Blur function to reduce noise.
- Step 5: Select the "Image" $\to$ "Adjust" $\to$ "Threshold" commands in this order, and adjust the threshold value to color the grain boundary and the bonding interface (see Figure 6A (b)). On that occasion, adjust, in the "Threshold" window, the threshold value to selectively change only the grain boundary and the bonding interface into red (in this analysis, the threshold value was set to 140 or more), thereby selecting the regions corresponding to the grain boundary and the bonding interface.
- Step 6: With the grain boundary and the bonding interface colored, select the "Apply" command in the "Threshold" window to binarize the region of interest (see Figure 6A(c)).
- Step 7: In the resulting binarized image, synthesize an infinite number of perpendicular lines at a pitch of 5 $\mu$m with respect to the bonding interface (see Figure 6B(d)). This synthesis of perpendicular lines can be performed using PowerPoint.
- Step 8: In the resulting synthesized image, specify a region where three or more adjacent (at a pitch of 5 $\mu$m) perpendicular lines (that is, with a width of 10 $\mu$m or more) do not intersect with the remaining bonding interface (see Figures 2A and 2B), as a discontinuous region.
- Step 9: Enlarge an image corresponding to the entire length (that is, 1200 $\mu$m) of the bonding interface line defined along the bonding interface and the position where the bonding interface was present, and visually select the discontinuous region. This selection of discontinuous region is performed by adding a length measurement line to each part specified as a discontinuous region in the enlarged image. Specifically, in ImageJ, select the [Edit] $\to$ [Add to Manager] $\to$ [ROI Manager] (or [Analyze] $\to$ [Tools] $\to$ [ROI Manager]) commands in this order to start the ROI Manager. Then, draw a straight line called Straight line (see the icon shown in Figure 6B(e)) parallel to the bonding interface line in the region including three or more perpendicular lines at a pitch of 5 $\mu$m (entire width: 10 $\mu$m). The addition of straight line is performed by clicking [Add] in the ROI Manager window (Figure 6B(e)). In this way, a plurality of Straight lines can be drawn.
- Step 10: Click [Measure] in the ROI Manager window to automatically display the Length of each Straight line (Figure 6B(f)). In this way, the total length of line segments corresponding to discontinuous regions can be automatically calculated.
- Step 11: Calculate the ratio of the total value of the Straight line Length relative to the entire length, using the Excel spreadsheet. That is, the total length obtained is divided by the entire length (that is, 1200 $\mu$m) of the bonding interface line, and the result is multiplied by 100, to calculate the ratio (%) of the total length of line segments corresponding to discontinuous regions relative to the entire length (that is, 1200 $\mu$m) of the bonding interface line.

<Charpy Impact Value>

A charpy impact test was performed in accordance with JIS Z 2242: 2018 to determine the charpy impact values of the base material and the bonding part of each bonded body sample. This charpy impact test was performed by processing the bonded body sample to prepare a V-notch specimen (length 55 mm, shape with a square section of 10 mm per side, V-notch at the center of the length, notch angle 45°, notch depth 2 mm, and notch bottom radius 0.25 mm) as specified in JIS Z 2242: 2018, and measuring the charpy impact value (absorbed energy) at 25°C or -196°C using a charpy impact tester (Automated Charpy Impact Tester CI-500D, manufactured by TOKYO KOKI TESTING MACHINE CO. LTD.). As a specimen for measuring the charpy impact value of the base material, a specimen was used having a V-notch formed on a base material sample separately prepared using the material used to prepare the bonded body. On the other hand, as a specimen for measuring the charpy impact value of the bonding part, a specimen was used having a V-notch formed so that its tip was positioned at a bonding interface position of the bonded body. The specimen with the tip of the V-notch positioned at the bonding interface position was obtained by previously etching the bonded body sample with 30% nitric acid to specify the position of the bonding interface, and then forming the V-notch so that the position of the tip of the V-notch coincided with the bonding interface position.

<Measurement of Electrical Conductivity and Conversion to Thermal Conductivity>

The electrical conductivity (IACS%) of each bonded body sample was measure at room temperature using an eddy current electrical conductivity meter (product name: Hocking AutoSigma 3000DL, manufactured by GE Sensing & Inspection Technologies). The obtained electrical conductivity was converted with a correlation equation based on the Wiedemann-Franz law to determine the thermal conductivity (W/mK).

[Table 2]

Table 2

| Ex. | Copper alloy | | | Surface treatment | Surface roughness Ra after surface treatment (μm) | Bonding conditions | | | Amount of deformation during bonding ΔL (%) |
|---|---|---|---|---|---|---|---|---|---|
| | Alloy type | Applicable standard | Alloy composition (% by weight) | | | Temp. × time | Pressure (MPa) | Degree of vacuum (Torr) | |
| 1a | CuBe11 | JIS C1751 | Cu-1.91Ni-0.39-Be | 30% nitric acid | 0.494 | 900°C x1h | 10 | $5×10^{-4}$ | 2.0 |
| 1b | | | | | | | | | |
| 1c | | | | | | | | | |
| 1d | | | | | | | | | |
| 2a | CuBe11 | JIS C1751 | Cu-1.91Ni-0.39-Be | 30% nitric acid | 0.506 | 900°Cx3h | 10 | $5×10^{-4}$ | 4.0 |
| 2b | | | | | | | | | |
| 2c | | | | | | | | | |
| 2d | | | | | | | | | |
| 2e | | | | | | | | | |
| 2f | | | | | | | | | |
| 3 | CuBe11 | JIS C1751 | Cu-1.91Ni-0.39-Be | 30% nitric acid | 0.562 | 900°Cx2.5h | 12 | $5×10^{-4}$ | 6.0 |
| 4a* | CuBe11 | JIS C1751 | Cu-1.91Ni-0.39-Be | 30% nitric acid | 0.129 | 900°Cx1 h | 8 | $5×10^{-4}$ | 24.0 |
| 4b* | | | | | | | | | |
| 5* | CuBe11 | JIS C1751 | Cu-1.91Ni-0.39-Be | 30% nitric acid | 0.292 | 900°Cx1 h | 4 | $5×10^{-4}$ | 1.0 |
| 6a* | AMPCO940 (Corson copper) | - | Cu-2.3Ni-0.6Si-0.5Cr-0.1Sn | 30% nitric acid | 1.107 | 900°Cx1 h | 12 | $5×10^{-4}$ | 16 |
| 6b | | | | | | | | | |
| 7a* | AMPCO944 (Corson copper) | - | Cu-7.1Ni-1.7Si-0.6Cr | 30% nitric acid | 1.275 | 900°Cx1 h | 16 | $5×10^{-4}$ | 10 |
| 7b | | | | | | | | | |
| * indicates comparative examples. | | | | | | | | | |

[Table 3]

[Table 3]

Table 3

| Ex. | Copper alloy | Bonded body subjected to i) solution annealing (930°C × 5 min → cooling with water) and aging treatment (450°C × 3 h → cooling in furnace) (Examples 1a to 5), or bonded body subjected to ii) solution annealing (same as above) and aging treatment (500°C × 2 h → cooling in furnace) (Examples 6a to 7b), optionally after homogenization annealing (temperature below × 8 h → cooling in furnace) | | | | | | | | |
|---|---|---|---|---|---|---|---|---|---|
| | Alloy type | homogenization annealing temperature | Ratio of discontinuous region on bonding interface line (%) | 25°C | | | -196°C | | |
| | | | | Bonding strength (MPa) | Breaking position | Ratio of bonding strength relative to that of base material (%) | Bonding strength (MPa) | Breaking position | Ratio of bonding strength relative to that of base material (%) |
| 1a | CuBe11 | Not performed | 3.9 | 733 | Bonding part | 91.6 | 859 | Base material | 98.0 |
| 1b | CuBe11 | 900°C | 4.7 | 798 | Base material | 99.8 | 847 | Base material | 96.6 |
| 1c | CuBe11 | 930°C | 8.8 | 802 | Base material | 100.3 | - | - | - |
| 1d | CuBe11 | 960°C | 14.8 | 806 | Base material | 100.8 | 869 | Base material | 99.1 |
| 2a | CuBe11 | Not performed | 22.3 | 786 | Base material | 98.3 | - | - | - |
| 2b | CuBe11 | 840°C | 43.9 | 812 | Base material | 101.5 | - | - | - |
| 2c | CuBe11 | 870°C | 48.8 | 744 | Bonding part | 93.0 | - | - | - |
| 2d | CuBe11 | 900°C | 9.7 | 799 | Base material | 99.9 | - | - | - |
| 2e | CuBe11 | 930°C | 64.1 | 777 | Bonding part | 97.1 | - | - | - |
| 2f | CuBe11 | 960°C | 66.5 | 793 | Bonding part | 99.1 | - | - | - |
| 3 | CuBe11 | Not performed | 7.9 | 762 | Bonding part | 95.3 | - | - | - |
| 4a* | CuBe11 | Not performed | 0.0 | 536 | Bonding part | 67.0 | - | - | - |
| 4b* | CuBe11 | Not performed | 0.0 | 347 | Bonding part | 43.4 | - | - | - |
| 5* | CuBe11 | Not performed | 0.0 | 212 | Bonding part | 26.5 | - | - | - |
| 6a* | AMPCO940 | Not performed | 0.0 | 611 | Bonding part | 94.4 | - | - | - |
| 6b | AMPCO940 | 960°C | 13.6 | 622 | Base material | 96.1 | - | - | - |
| 7a* | AMPCO944 | Not performed | 0.0 | 830 | Bonding part | 87.1 | - | - | - |
| 7b | AM PCO944 | 960°C | 3.6 | 878 | Bonding part | 92.1 | - | - | - |
| * indicates comparative examples. | | | | | | | | | |

[Table 4]

Table 4

| Ex. | Copper alloy | Bonded body subjected to i) solution annealing (930°C × 5 min → cooling with water) and aging treatment (450°C × 3 h → cooling in furnace) (Examples 1a to 5), or bonded body subjected to ii) solution annealing (same as above) and aging treatment (500°C × 2 h → cooling in furnace) (Examples 6a to 7b), optionally after homogenization annealing (temperature below × 8 h → cooling in furnace) | | | | | |
|---|---|---|---|---|---|---|---|
| | Alloy type | 25°C | | -196°C | | Electrical conductivity (%IACS) | Thermal conductivity (W/mK) |
| | | Charpy impact value (J/cm$^2$) | Ratio of impact value of bonding part relative to that of base material (%) | Charpy impact value (J/cm$^2$) | Ratio of impact value of bonding part relative to that of base material (%) | | |
| 1a | CuBe11 | 14 | 15 | 29 | 17 | 60.5 | 248 |
| 1b | CuBe11 | 34 | 39 | 43 | 25 | - | - |
| 1c | CuBe11 | - | - | - | - | - | - |
| 1d | CuBe11 | 33 | 38 | 66 | 39 | - | - |
| 2a | CuBe11 | - | - | - | - | 59.8 | 246 |
| 2b | CuBe11 | - | - | - | - | 57.0 | 235 |
| 2c | CuBe11 | - | - | - | - | 60.3 | 248 |
| 2d | CuBe11 | - | - | - | - | 54.5 | 226 |
| 2e | CuBe11 | - | - | - | - | 56.2 | 232 |
| 2f | CuBe11 | - | - | - | - | 57.2 | 236 |
| 3 | CuBe11 | - | - | - | - | 55.4 | 230 |
| 4a* | CuBe11 | - | - | - | - | 59.1 | 243 |
| 4b* | CuBe11 | - | - | - | - | 59.3 | 244 |
| 5* | CuBe11 | - | - | - | - | 60.1 | 247 |
| 6a* | AMPCO940 | - | - | - | - | 42.2 | 180 |
| 6b | AMPCO940 | - | - | - | - | - | - |
| 7a* | AMPCO944 | - | - | - | - | 31.0 | 136 |
| 7b | AMPCO944 | - | - | - | - | - | - |
| * indicates comparative examples. | | | | | | | |

## Claims

1. A copper alloy bonded body composed of a plurality of members made of an age-hardenable copper alloy, the members diffusion-bonded to one another, wherein a bonding interface between the members remains,

   wherein the content of beryllium in the age-hardenable copper alloy is 0.7% by weight or less, and
   wherein in a laser microscope image of a section including the bonding interface, a ratio of a total length of a line segment corresponding to a discontinuous region relative to an entire length of a bonding interface line defined along the bonding interface and a position where the bonding interface was present is 3.5% or more, and

wherein the discontinuous region is defined as a region where, when a plurality of perpendicular lines is drawn with respect to the bonding interface line at a pitch of 5 μm, three or more adjacent perpendicular lines do not intersect with the remaining bonding interface.

2. The copper alloy bonded body according to claim 1, wherein the copper alloy bonded body has undergone solution annealing and an aging treatment.

3. The copper alloy bonded body according to claim 1 or 2, wherein a strength of a bonding part of the copper alloy bonded body is 70% or more of a strength of a base material of the copper alloy bonded body.

4. The copper alloy bonded body according to claim 1 or 2, wherein a strength of a bonding part of the copper alloy bonded body is 85% or more of a strength of a base material of the copper alloy bonded body.

5. The copper alloy bonded body according to claim 1 or 2, comprising crystal grains of the age-hardenable copper alloy grown beyond the bonding interface or the position where the bonding interface was present.

6. The copper alloy bonded body according to claim 1 or 2, wherein a residual component derived from a material other than the age-hardenable copper alloy is absent at the bonding interface or the position where the bonding interface was present.

7. The copper alloy bonded body according to claim 1 or 2, wherein a base material and a bonding part of the copper alloy bonded body have a strength of 520 MPa or higher.

8. The copper alloy bonded body according to claim 5, wherein the base material and the bonding part of the copper alloy bonded body have a strength of 690 MPa or higher.

9. The copper alloy bonded body according to claim 1 or 2, wherein a bonding part of the copper alloy bonded body has a bonding strength that is 85% or more of a strength of a base material of the copper alloy bonded body at a temperature of -196°C.

10. The copper alloy bonded body according to claim 1 or 2, wherein a bonding part of the copper alloy bonded body has a charpy impact value that is 15% or more of a charpy impact value of a base material of the copper alloy bonded body at each temperature of 25°C and -196°C.

11. The copper alloy bonded body according to claim 1 or 2, wherein a base material including a bonding part of the copper alloy bonded body has a thermal conductivity of 209 W/mK or more.

12. The copper alloy bonded body according to claim 1 or 2, wherein a base material including a bonding part of the copper alloy bonded body has an electrical conductivity of 50 IACS% or more.

13. The copper alloy bonded body according to claim 1 or 2, wherein the age-hardenable copper alloy is at least one selected from the group consisting of beryllium copper alloy 11 (JIS alloy number C1751, EN material number CW110C, and UNS alloy number C17510), beryllium copper alloy 10 (EN material number CW104C and UNS alloy number C17500), beryllium copper CuCo1Ni1Be (EN material number CW103C), beryllium copper alloy 14Z (composed of Be: 0.2 to 0.6% by weight, Ni: 1.4 to 2.4% by weight, Zr: 0 to 0.5% by weight, and the balance being Cu and inevitable impurities), beryllium copper alloy 50 (composed of Be: 0.2 to 0.6% by weight, Ni: 1.4 to 2.1% by weight, Ag: 0.1 to 0.3% by weight, Zr: 0 to 0.5% by weight, and the balance being Cu and inevitable impurities), beryllium copper alloy 10Zr (composed of Be: 0.4 to 0.7% by weight, Co: 2.0 to 2.8% by weight, Zr: 0 to 0.3% by weight, and the balance being Cu and inevitable impurities), chromium copper (UNS alloy number C18200), chromium zirconium copper (UNS alloy number C18510 and EN material number CW106C), zirconium copper (UNS alloy number C15000, EN material number CW120C), and Corson copper (EN material number CW109C, CW111C, UNS alloy number C19010, C70250, AMPCO944 (composed of Ni: 6.5 to 7.5% by weight, Si: 1.5 to 2.5% by weight, Cr: 0.5 to 1.5% by weight, and the balance being Cu and inevitable impurities), and AMPCO940 (composed of Ni: 1.5 to 3.0% by weight, Si: 0.5 to 1.5% by weight, Cr: 0.3 to 1.5% by weight, and the balance being Cu and inevitable impurities)).

14. The copper alloy bonded body according to claim 13, wherein the age-hardenable copper alloy is a beryllium copper alloy 11 (JIS alloy number C1751, EN material number CW110C, and UNS alloy number C17510).

**15.** The copper alloy bonded body according to claim 1 or 2, wherein the copper alloy bonded body comprises a flow passage space inside.

Acid Washing - Loading into Furnace

Temperature Increase (Progress of Oxidation)

Appearances of Samples

# FIG. 1A

AWS stands for acid-washed surface. IFOS stands for in-furnace open surface. CCS stands for close contact surface

FIG. 1B

**AMPCO940(Cu-2.3Ni-0.6Si-0.5Cr-0.1Sn)**
**10⁻⁵Torr** Close contact surface
Oxide film is slightly formed on close contact surface

**AMPCO944(Cu-7.1Ni-1.7Si-0.6Cr)**
**10⁻⁵Torr** Close contact surface
Oxide film is slightly formed on close contact surface

FIG. 1C

EP 4 553 179 A1

FIG. 2A

FIG. 2B

FIG. 3

FIG. 4

← :Bonding Interface Position

Ex. 3 | without Homogenization Annealing

Ex. 4a (Comp.) | without Homogenization Annealing

Ex. 4b (Comp.) | without Homogenization Annealing

Ex. 5 (Comp.) | without Homogenization Annealing

Ex. 6a (Comp.) | without Homogenization Annealing

Ex. 6b | 960°C

Ex. 7a (Comp.) | without Homogenization Annealing

Ex. 7b | 960°C

# FIG. 5

FIG. 6A

(d)

(e)

Straight line

(f)

| Length |
|--------|
| 21.081 |
| 22.838 |
| 72.568 |
| 13.784 |
| 17.703 |
| 15.411 |
| 14.324 |

FIG. 6B

## INTERNATIONAL SEARCH REPORT

| International application No. |
|---|
| **PCT/JP2023/024696** |

### A. CLASSIFICATION OF SUBJECT MATTER

***C22C 9/00***(2006.01)i; ***B23K 20/00***(2006.01)i; ***C22F 1/08***(2006.01)i; *C22F 1/00*(2006.01)n

FI: C22C9/00; C22F1/08 M; B23K20/00 310H; C22F1/00 692A; C22F1/00 682; C22F1/00 650B; C22F1/00 651A; C22F1/00 661A; C22F1/00 650F; C22F1/00 630M; C22F1/08 B; C22F1/00 602; C22F1/00 630A; C22F1/00 627; C22F1/00 691B; C22F1/00 691C; C22F1/00 691Z; C22F1/00 683

According to International Patent Classification (IPC) or to both national classification and IPC

### B. FIELDS SEARCHED

Minimum documentation searched (classification system followed by classification symbols)

C22C9/00; B23K20/00; C22F1/08; C22F1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-115631 A (NGK INSULATORS LTD) 10 August 2021 (2021-08-10) | 1-15 |
| A | WO 2021/002364 A1 (NGK INSULATORS LTD) 07 January 2021 (2021-01-07) | 1-15 |
| A | US 2012/0270070 A1 (THE INDUSTRY & ACADEMIC COORPORATION IN CHUNGNAM NATIONAL UNIVERSITY (IAC)) 25 October 2012 (2012-10-25) | 1-15 |
| P, A | WO 2022/149561 A1 (KYUSHU UNIVERSITY, NATIONAL UNIVERSITY CORPORATION) 14 July 2022 (2022-07-14) | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/024696**

| Patent document cited in search report | | | Publication date (day/month/year) | Patent family member(s) | | | Publication date (day/month/year) |
|---|---|---|---|---|---|---|---|
| JP | 2021-115631 | A | 10 August 2021 | (Family: none) | | | |
| WO | 2021/002364 | A1 | 07 January 2021 | US | 2022/0119930 | A1 | |
| | | | | EP | 3995247 | A1 | |
| | | | | CN | 114072531 | A | |
| US | 2012/0270070 | A1 | 25 October 2012 | KR | 10-2012-0120025 | A | |
| WO | 2022/149561 | A1 | 14 July 2022 | JP | 2023-40084 | A | |
| | | | | CN | 116323066 | A | |
| | | | | KR | 10-2023-0104291 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H987780 A

- JP 2017145472 A